# EUROPEAN PATENT SPECIFICATION

(11) **EP 0 596 160 B1**
(45) Date of publication and mention of the grant of the patent: **17.03.1999**
(21) Application number: 92203412.9
(22) Date of filing: 06.11.1992
(51) Int. Cl.: A01G 9/10

(54) **Self-watering air-pruning plant tray and transplanting system**
Pflanzenzuchtplatte mit Selbstbewässerung und Luftbeschneidung sowie Pflanzensystem
Récipient pour plantes pour arrosage et arrêt des racines à l'air ainsi que système de plantation

(43) Date of publication of application: 11.05.1994
(73) Proprietor: Huang, Barney Kuoyen, Dr., Raleigh, North Carolina 27603 (US)
(72) Inventor: Huang, Barney Kuoyen, Dr., Raleigh, North Carolina 27603 (US)
(74) Representative: Pidgeon, Robert John

(56) References cited:
- US-A- 2 893 168
- US-A- 3 028 705
- US-A- 4 236 350
- US-A- 4 495 725

## Description

The present invention relates to plant, seedling, and plug containers and trays with detachable screen bottoms for growing and handling air-pruned plants for superior plant growth and to increase agricultural production, including both greenhouse and field crops. It also relates to automatic transplanting of plants, seedlings, and plugs to increase production efficiency and to reduce the high labor requirement of transplanting to achieve automation of cultural and operational practices both in the field and greenhouse.

Mechanization and automation are as important for plant growers and nurserymen as it is for any other field of agriculture. This is because there is a tremendous amount of labor involved in the operation of a nursery, and the growers have to contend with the problems of scarcity of labor and overall labor costs just as any other business.

One particular labor intensive area is that of transferring or transplanting relatively young and small plants from their initial rooting container to a larger plant container or to the field for further growth and development. As in other fields of agriculture, a great deal of nurseries and plant producing facilities generally perform this operation by hand. Consequently, plant transfer and transplanting are time consuming and very inefficient. As a practical matter, the use of manual labor to transplant such plants severely limits the capacity of a farm or nursery for handling such transfer or transplanting operations.

Therefore, there is and continues to be, a need for a fully automatic plant transplanting system that will automatically transfer plants from an initial growing tray or container to a transfer area or second container for further growth and development.

Healthy seedlings of uniform size are required for transplanting in order to produce a superior plant in a greenhouse or in the field. Many plant growth containers or trays of various materials, shapes and sizes are commercially available for plant or seedling culture varying in price, design and durability. A major problem associated with a conventional tray is root binding or tangling which deters plant root development within the container and after the seedlings are transplanted. An example of the air-pruning tray and its important application as an integral part of the fully automatic transplanting has been disclosed by Dr. Barney K. Huang in U.S. Patent No. 3,712,252 and U.S. Patent No. 3,446,164.

U.S. Patent No, 4,236,350 (Hasselbach) discloses a seedling tray which includes a base, a sheet of embossed material in the base and, spaced from the bottom thereof, a seedling grid resting on the embossed material. Additionally there is a deeply dished cover overlying the base and seedling grid. Assembly of the tray is by lowering the embossed material and grid into the base, then placing the cover over the base.

Numerous field tests indicate that air-pruned cuttings and seedlings are significantly superior in growth performance both in the trays and after transplanting and the effective fully automatic transplanting can be performed with the air-pruned seedlings for various crops. However, the mass production of an integrated air-pruning tray and detachable screen bottom at a low cost has been a problem due to conventional plastic forming processes.

Objects of the present invention include the following: to provide a plant growing tray system that enables the plant tray to effect and carry out effective root air-pruning, to meet the requirements of plastic forming processes for quality mass production at a relatively low cost; to be adaptable to a fully automatic transplanter and easy handling of a large number of air-pruned seedlings; to provide a generally rigid plant tray and screen structure for self-supporting and easy handling; to provide a plant tray which facilitates the automatic transfer of groups of plants from an open bottom supply tray by actually pushing or pulling selected plants from and through the open bottom of the supply tray, using a continuous, intermittent or impulse vacuum system; to provide a plant tray which facilitates an automatic plant transfer or transplanting system that is relatively simple in construction and which is reliable and easy to use; and to provide a plant tray structure having a surrounding edge to hold water surrounding each tray cell for self-watering, increased tray rigidity, and maintaining uniform root-zone temperature and moisture content throughout the tray.

In accordance with the present invention there is provided an air-pruning plant tray comprising: a plant tray having a surrounding side structure, and means with an open bottom incorporated within the plant tray for holding a plant growing medium such as soil, peat cake or peat mix; a bottom screen detachably secured to the surrounding side structure of the plant tray for retaining the plant growing medium within the plant tray and for giving rise to air pruning; and means for detachably securing the bottom screen to the surrounding side structure of the plant tray so as to form a unitary plant tray and screen structure, such that the bottom screen can be readily attached to and detached from the plant tray.

Preferred aspects of the present invention are set out in the dependent claims, to which reference should now be made.

Other objects and advantages of the present invention will become apparent and obvious from a study of the following description and the accompanying drawings which are merely illustrative of such invention.
Figure 1 is a fragmentary cross-sectional view that illustrates a plant tray of the present invention showing the surrounding edge of the air-pruning tray and the surrounding edge of the detachable screen or perforated bottom which is press fitted onto the bottom portion of the air-pruning tray.
Figure 2 is a fragmentary view of the plant tray and screen of Figure 1 with portions of the plant tray broken away to better illustrate the screen.
Figure 3 is a fragmentary cross-sectional view that illustrates another design of plant tray of the present invention showing the surrounding edge of the air-pruning tray and the surrounding edge of the detachable screen or perforated bottom which is click fitted onto the bottom portion of the air-pruning tray.
Figure 4 is a schematic fragmentary cross-sectional view that illustrates an air-pruned seedling being shot out from the tray of Figure 3 with water to facilitate fully automated transplanting.
Figure 5 is a perspective view of a plant tray of the present invention with a slide-on or slide-off detachable screen being shown in a partially detached extended position (with an enlarged view of one corner) from the tray bottom.
Figure 6 is a series of views illustrating a peat cake or pre-seeded peat cake in a plant tray cell of the present invention effectuating peat cake expansion and air-pruning.
Figure 7 is a cross-sectional view of a plant tray of the present invention utilized to grow a continuous strip of sod.
Figure 8 is a fragmentary perspective view of the plant tray illustrated in Figure 7 showing the plant tray holding an area of sod with a portion of sod and its plant growing medium being cut away to better illustrate the entire tray structure.
Figure 9 is a perspective view of a plant transfer or transplanting system illustrating the transfer of air-pruned plants from a supply tray to a series of individual pots forming a part of a second tray.

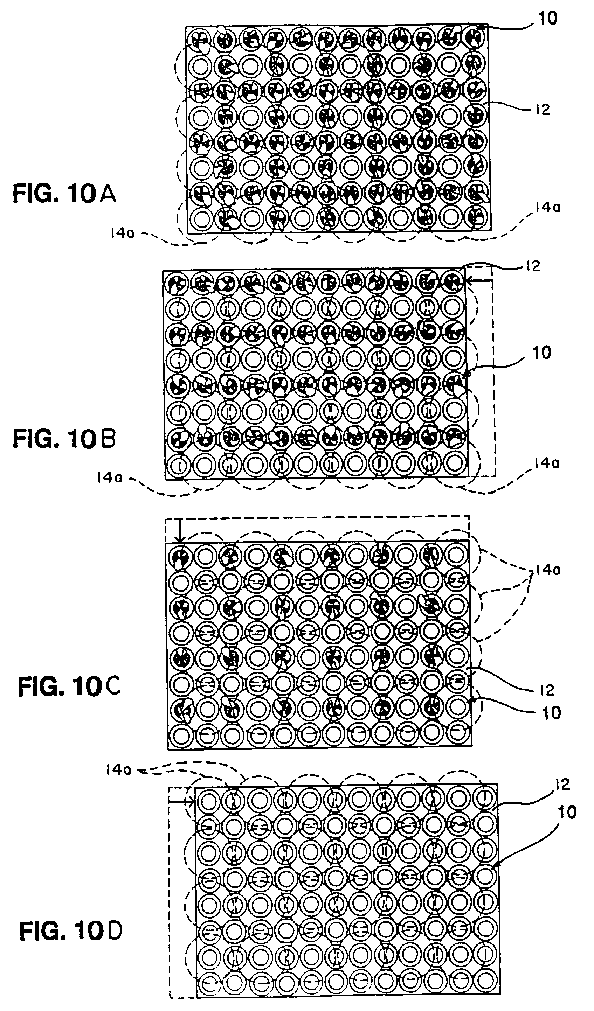

Figure 10A through 10D are a sequence of views illustrating a series of matrix plant transfers from a supply tray to an underlying filling tray with Figure 10A illustrating the transfer of a first set of 24 plants to the underlying receiving tray; **Figure 10B** illustrating the supply tray being moved one plant increment to the left and the transfer of a second set of 24 plants; **Figure 10C** illustrating the supply tray being moved one plant increment downwardly from the position shown in Figure 10B and the transfer of a third set of 24 plants; and finally, **Figure 10D** showing the supply tray being moved to the right one plant increment from that shown in Figure 10C and the transfer of a fourth set of 24 plants.
**Figure 11** is a cross sectional illustration of a plant transfer or transplanting system of an alternative design.
**Figure 11A** is a fragmentary perspective view showing a portion of the drop tube, vacuum chamber and doors of the transplanting system shown in Figure 11.
**Figure 11B** is a cross sectional functional view of the structure shown in Figure 11A.
**Figure 11C** illustrates an alternate design for the plant transfer or transplanting system where the doors shown in Figures 11A and 11B are replaced by an air jet arrangement.
**Figure 12** is a schematic illustration of the plant transfer or transplanting system having an intermittent or impulse vacuum system with a diaphragm.
**Figure 12A** is a schematic illustration of the plant transfer or transplanting system having an intermittent or impulse vacuum system with an O-ring.

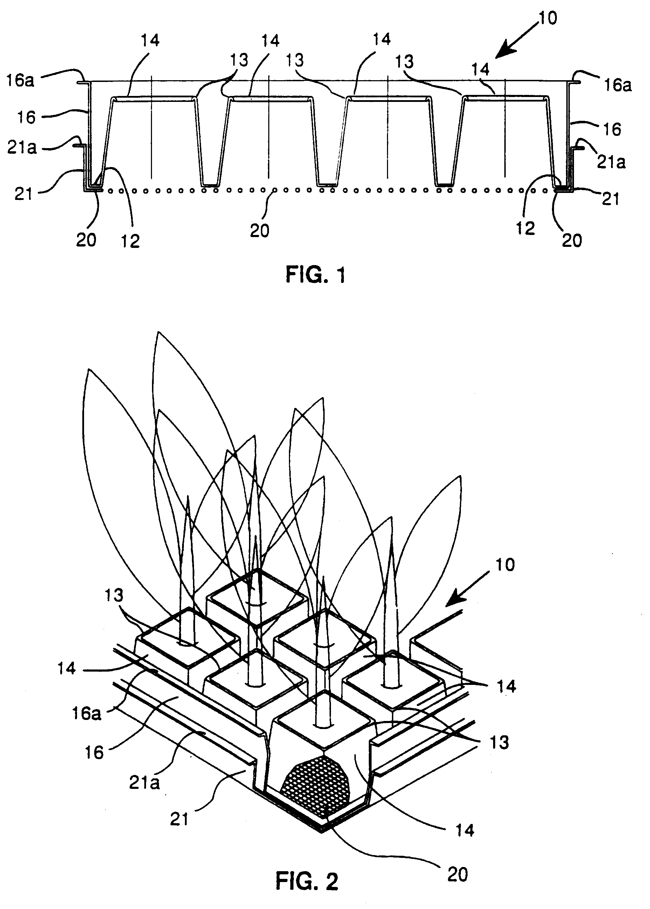

With further reference to the drawings, the air-pruning plant tray of the present invention is shown therein and indicated generally by the numeral 10 in Figure 1 and 2. Plant tray 10 includes a main plant holding body that comprises a base 12, a plurality of aligned and uniformly spaced truncated pyramid or cone shaped cells 14 and surrounding sides 16 which holds water surrounding each cell for self watering from the cell top or microholes in the cell wall. This watering capability will maintain a uniform temperature and moisture level in the individual cells throughout the tray 10. Formed about the upper portion of side 16 is an outwardly directed edge or flange 16a. The existence of side 16 surrounding the outer edge of the tray increase the rigidity of tray for easy handling. Side 16 is designed to fit into the index frame of a fully automatic transplanting machine for indexing. Each cell 14 tapers upward from the open-bottom which provides air pruning of plant roots and eliminates root-tangling and root-binding. The open-top of each cell edge has a small inward curl 13 to facilitate the passage of plant shoots during transplanting. Each cell in practice is filled with a plant growing medium such as soil, loose peat mix, compressed peat cake or the like. It is appreciated that any conventional plant growing medium can be utilized in the plant tray 10 of the present invention.

Press fitted to the bottom portion of the tray 10 is a detachable screen or perforated bottom 20 which functions to hold and confine the plant growing medium within each cell 14. The bottom also has a surrounding side 21 which is designed to fit snugly into the bottom portion of the tray 10. Formed about the upper portion of side 21 is an outwardly directed edge or flange 21a. After pressing the detachable bottom 20 into the tray 10, the rigidity of the integrated tray system increases considerably for easy handling and shipping of seedlings, as well as for self supporting to minimize the tray supporting structure in the greenhouse. Secured screen 20 functions to allow the plant tray 10 to effectively air prune the respective plant roots grown in the plant cells or tray cells 14. One can readily remove the screen 20 from the plant tray 10 by pressing edge 16a and side 21a apart. This facilitates removing screen 20 from plant tray 10.

From the above specification and discussion, it is appreciated that the detachable, frictionally fitted screen 20 has numerous advantages in that the same can be easily and quickly attached and detached from the plant tray 10. As appreciated from the drawings, the screen 20 includes an upturn side 21 that is designed to frictionally engage the upturn side 16 of the plant tray. To remove screen 20 from the bottom of plant tray 10, all that is required is that the frictional force holding the screen 20 about the bottom of the plant tray 10 be overcome.

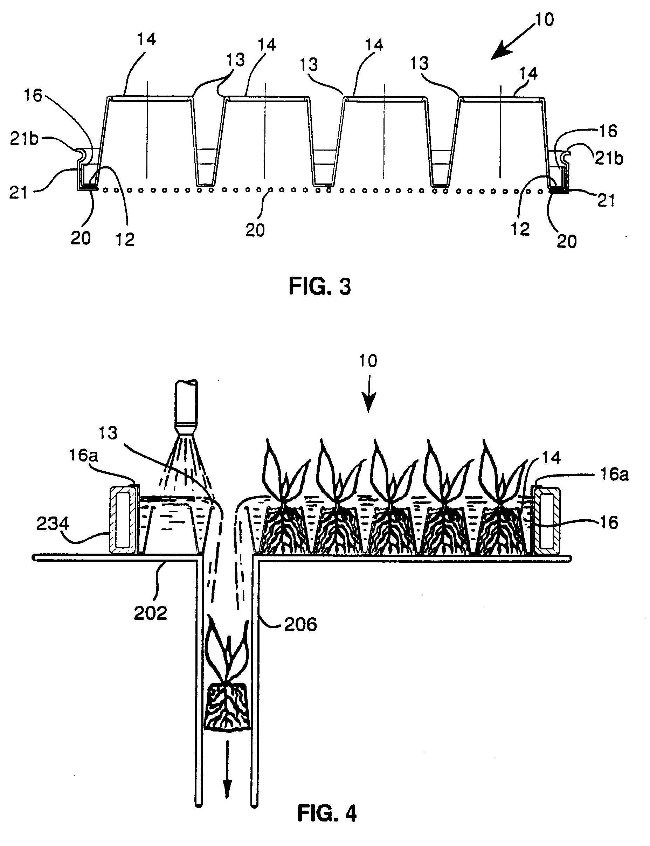

Figure 3 discloses another embodiment of the present invention that is similar in principle to the embodiment shown in Figure 1. The basic difference is that in the embodiment illustrated in Figure 3 the side of the detachable bottom 20 is click fitted (or "snapped on") into the indented edge of the air-pruning tray. In particular, the upturn side 21 includes an upper curled click 21b that tends to be biased over the upper terminal side 16 of the tray 10. Thus, it is appreciated that click 21b tends to positively hold the screen 20 about the bottom of the tray 10.

Figure 4 illustrates the application of this air-pruning tray to fully automated transplanting. The plant loaded tray 10 is fitted into an indexing frame 234 over the plant bearing plate 202 of the transplanter. As the tray cell 14 is indexed over the suction drop tube 206, both plant and water are injected simultaneously to a planting area, whether it be in the field, in a pot, or in containers. The presence of the water is of course important in providing for the well being of the plant after transplanting, but the water also provides an effective seal between the tray 10 and bearing plate 202 and consequently contributes to the efficient inducement of plants from the plant tray during transplanting. Also, the downward force of the water from the injection tube needs to provide an opening within the soil or other plant medium for receiving the plant. Additionally, the downward force of the injected water tends to cover the plant root area once the plant has been set in the soil or plant growing medium.

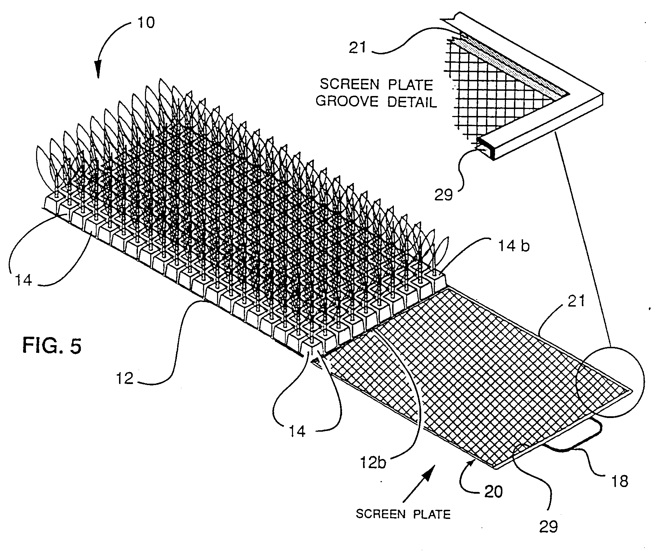

Figure 5 discloses yet another embodiment of the present invention that is similar in principle to the embodiment shown in Figure 3. The basic difference is that in the embodiment illustrated in Figure 5 both sides 21 of the detachable bottom screen 20 serve as slide grooves fitted into the side edges 16 (Figure 3) of the air-pruning tray 10 that may be used as a slide support. Screen 20 also includes a catch groove 29 that mates with the tray edge 12b to provide for the secure attachment of the screen 20 to the tray 10. Thus, it is appreciated that the rigid screen or grid 20 shown in Figure 5 can be simply moved into and out of engagement with the main body of the plant tray 10. Detachable rigid screen 20 may be provided with a handle 18 such as illustrated in Figure 5.

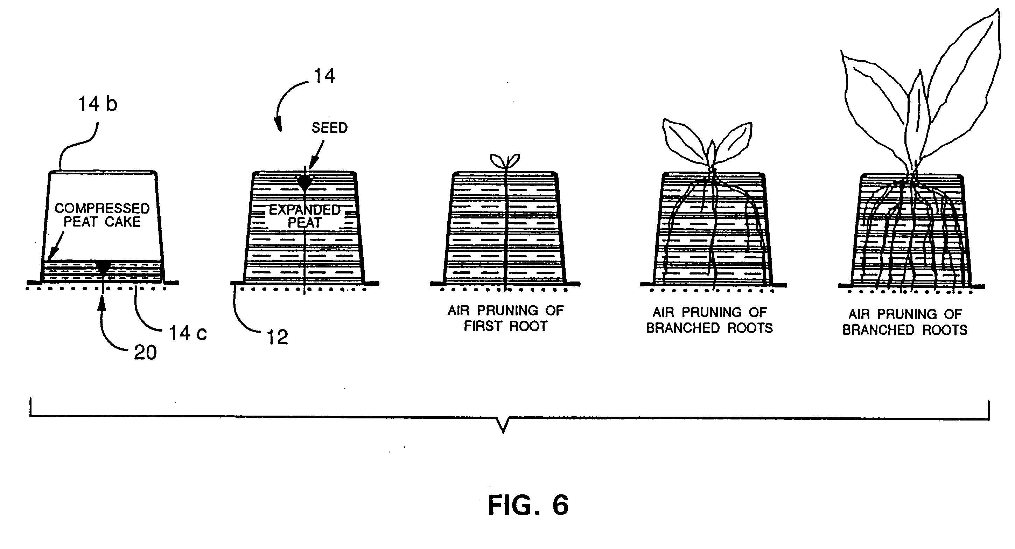

Figure 6 discloses a plant growing medium such as peat or peat mix being compressed into a pellet or cake form to reduce its volume and for easy handling. This method or process of forming peat and peat mix entails first measuring the volume of growth medium needed to fill a tray cell after expansion. Next, the growth medium is compressed with a compressor to form a desired cake shape and thickness that is suitable for a tray cell and which makes handling, transporting and tray cell filling easy. Next, the process entails taking the formed cakes and filling the individual cells of the growing tray. As illustrated in Figure 6, the respective compressed cakes can be loaded into each tray cell 14. Next, the air-pruning trays with each cell loaded with a peat cake can be submerged into a hot bath for easy expansion. Also, it is appreciated that the hot bath tends to sanitize the trays and peat cakes, and therefore provides for improved growing efficiency and consistency without disease. The expanded peat cake automatically fills up the each cell space in short time and the expanded peat cake can be seeded as shown in Figure 6.

Also, the process or method includes selecting a variety of seeds to be pre-seeded on the pellets or cake. Next, spot glue is applied to the respective compressed pellets or cakes. Then the spot glued pellets or cakes are directed to a seed bay and a seed is transferred onto each pellet or cake. It should be appreciated that this process entails the possibility of feeding a seed onto a pre-glued pellet or cake using a conventional seeder. A growing tray loaded with a pre-seeded peat pellet or cake in each tray cell 14 can be submerged into water bath with optimum germination temperature for quick germination and peat cake expansion.

Once the respective cells have been filled with the plant growing medium the screen 20 can be attached to the bottom thereof in any one of the ways described above or in any equivalent fashion. Thereafter, the plant tray 10 can be turned back to where the base 12 of the plant tray structure and the screen 20 assume a bottom position shown in Figure 6. In this position, the entire plant tray structure can be easily transported and moved from one location to another without the plant growing medium falling from the respective cells 14. Also, in this position, the respective cells can be seeded, germinated and grown to a transplanting size with effective air-pruning of roots for enhanced root branching and accelerated plant growth (Figure 6). Once the seeds have germinated and the plants have reached transplanting size, the plant tray system of the present invention can be used in an automatic transplanting operation. To accomplish this, the screen 20, by any of the means described herein above, can be detached from the bottom of the main body of the plant tray structure so as to leave the bottom of the plant tray structure open. This allows a tray structure to be used in a manner where the respective plants in each cell 14 are extracted or pulled from the bottom of the plant tray structure by a fully automatic transplanting system or can simply be removed by hand. The plants can also be removed by pushing them from the top by manual, mechanical or pneumatic means as used by a conventional transplanter.

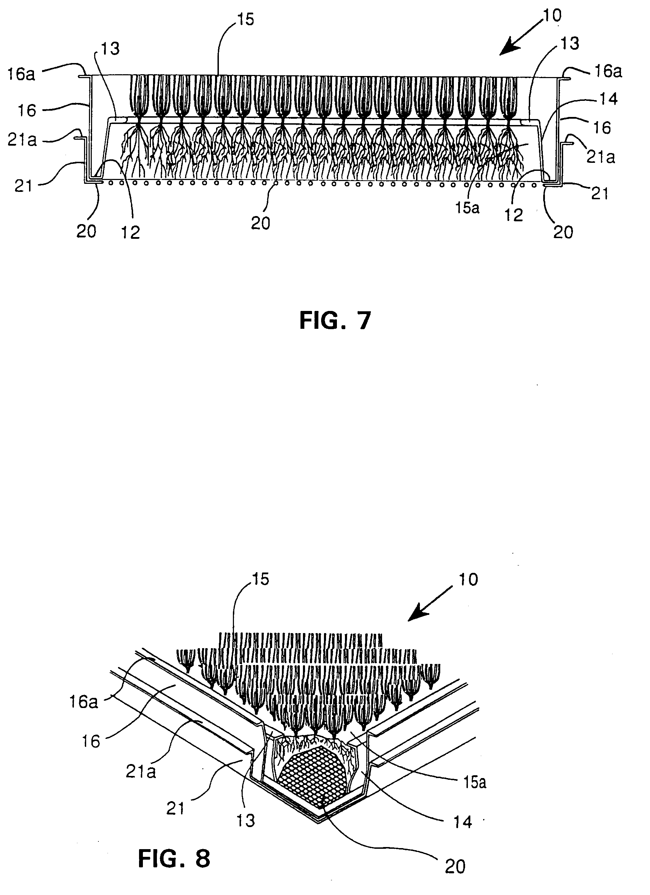

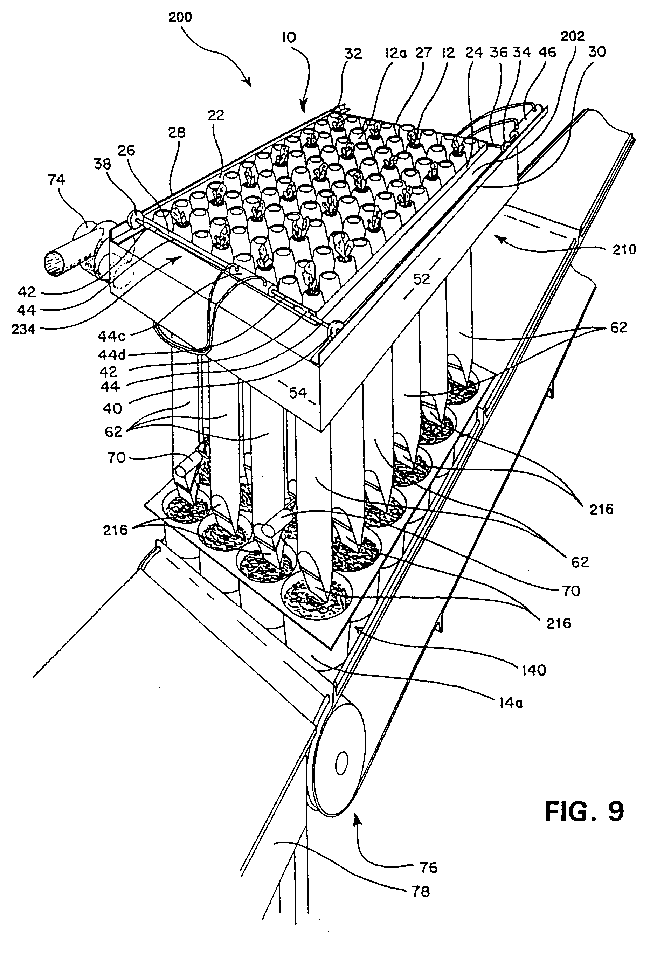

Turning to Figures 7 and 8, it is seen therein that the plant tray 10 of the present invention is designed and adapted to accommodate the growing of sod, indicated by the numeral 15, under air-pruning conditions. Essentially, the plant tray 10 of the present invention in the embodiment illustrated in Figures 8 and 9, forms one relatively large growing cell that is occupied by a continuous layer of sod. In order to accommodate the sod 15, the tray is designed to accept a plant growing medium in the form of a piece of foam, styrofoam or the like or any other suitable plant growing medium such as discussed herein before. But in the case of sod, it has been found that a porous lightweight material such as foam, styrofoam, etc., makes for a quality medium.

In the planting operation, the plant growing medium such as a foam strip is laid over the bottom of the detachable screen 20 and is confined within the sides 16 of the tray. Thereafter, the seed is uniformly spread over the plant growing medium and thereafter the tray and plant growing medium is treated in conventional fashion. The seeds will germinate and thereafter a root structure will extend downwardly through the porous lightweight plastic or styrofoam material (or other medium) and because of the presence of the screen an air-pruning effect will be achieved such as illustrated in Figure 8. The grass or upper portion of the sod will extend up from the plant growing medium as illustrated in Figure 8.

Once the grass or sod has matured, the screen 20, as has been described herein before, is removed from the tray 10. Next, the sod 15 including the plant growing medium 15a is grasped and removed from the plant tray. It should be appreciated that this produced sod can be easily handled because of the nature and construction of the plant growing medium and particularly a plant growing medium such as a lightweight porous foam material. It is appreciated that once the sod is planted on a ground or earth surface that the lightweight porous foam-type material will, over time, break down and disintegrate into the earth and become a part thereof.

Turning to Figure 9, a plant transfer or transplanting system used with advantage with plant trays of the present invention is shown therein and indicated generally by the numeral 200. As will be appreciated from subsequent portions of this disclosure, the air-pruning plant tray 10 forms a part of transplanting system designed to transfer one or more plants at a time from a supply tray to a receiving area such as pots, trays or a field environment.

To contain and control supply tray 10, plant transfer system comprises a X-Y type indexing frame 234 that is movable over the plant bearing plate 202 of the transplanter 200 for receiving and holding supply tray 10. Indexing frame 234 is movably mounted and can be indexed in both X and Y directions about bearing plate 202 using electrical, hydraulic, mechanical or pneumatic means. Bearing plate 202 forms the top of the common vacuum chamber 210 which includes side and end walls 52 and 54 and a bottom with a series of vacuum tubes 62. Disposed about the lower end of each vacuum tube is an openable and closable assembly 216. Each vacuum tube contains an inner drop tube that communicates with each respective opening formed in bearing plate 202.

To generate a vacuum within the vacuum chamber 210, there is provided a continuous vacuum source 74 in the form of an electric motor and associated fan assembly.

Also forming a part of the plant transfer means is a lower conveyor or indexing means indicated generally by the numeral 76. It functions to transfer the respective plant receiving means 140 to an appropriate position under the vacuum tubes 62 where the transfer of plants actually takes place. It is appreciated that the conveyor means 76 would be operated in time relationship to the indexing frame 234.

Turning to the operation of the plant transfer system 200 of the present invention, reference is first made to Figures 10A through 10D. For the sake of explanation, supply tray 10 is provided with ninety-six (96) plant cells and the plant transfer system 200 is designed to transfer twenty-four (24) plants at a time. Thus, as viewed in Figure 10A, supply tray 10 assumes a first position. In that position, a selected matrix of twenty-four (24) plants overlies twenty-four (24) openings provided within bearing plate 202 above the vacuum chamber. The plants overlying the twenty-four (24) openings are aligned with twenty-four (24) larger receiving pots 14a, as illustrated in Figure 10A. Once in this first position, the vacuum device is actuated causing all twenty-four (24) overlying plants to be pulled from the supply tray and directed into the 24 underlying pots 14a. Figure 10A shows the twenty-four (24) empty cells, each empty cell representing the transfer on a single plant from the supply tray 10 into an underlying aligned receiving container 14a.

At this point, the conveyor means 76 is actuated to move the underlying transplanted containers 14a onto an adjacent support 78 and to convey empty set of containers into the receiving position that is defined underneath vacuum tubes 62.

To continue the transfer of plants, indexing frame 234 is actuated so as to move the entire tray 10 one plant or plant cell increment to the left as illustrated in Figure 10B. This allows twenty-four (24) additional plants to be appropriately aligned over the respective openings within bearing plate 202 that overlies vacuum tubes 62. By the same process described herein above, a second set of twenty-four (24) plants are directed into the set of twenty-four (24) containers 14a that underlie vacuum tubes 62. After this, the indexing frame is again actuated and is moved one plant increment downwardly to the position illustrated in Figure 10C. There a third set of twenty-four (24) plants are appropriately aligned over the twenty-four (24) vacuum tubes 62 for transfer. Finally, after the transfer of the third set of twenty-four (24) plants, the indexing frame 234 is actuated again and moved one plant increment to the right, as illustrated in Figure 10D. In this position, the final or fourth set of twenty-four (24) plants are appropriately aligned for transfer to underlying plant containers 14a.

Once this final set of twenty-four (24) plants has been transferred, then the empty plant tray 10 is removed from the indexing frame 234 and a loaded plant tray 10 is placed within the indexing frame 234.

It should be appreciated that the plant transfer or transplanting system can be adapted to accommodate various size plant trays with varying numbers of plant cells formed therein.

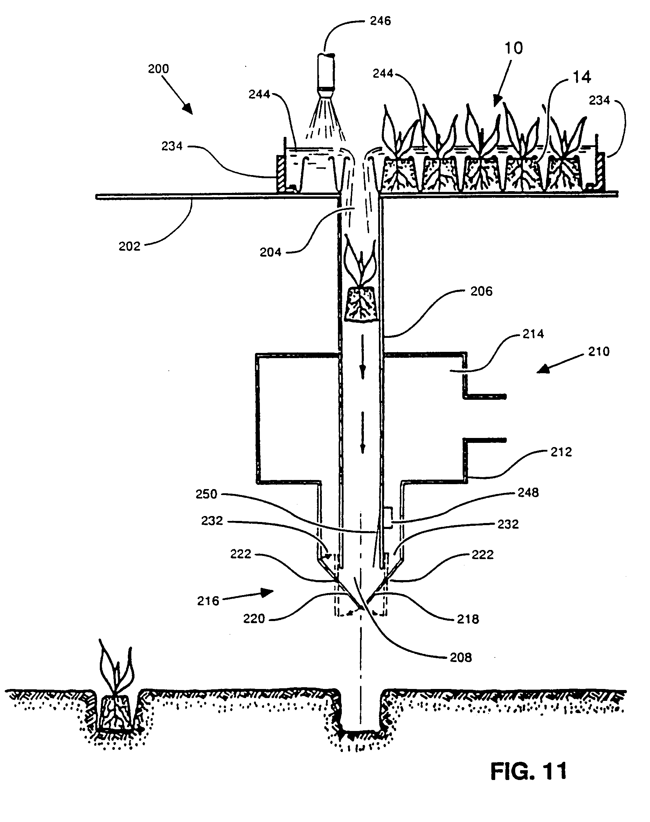

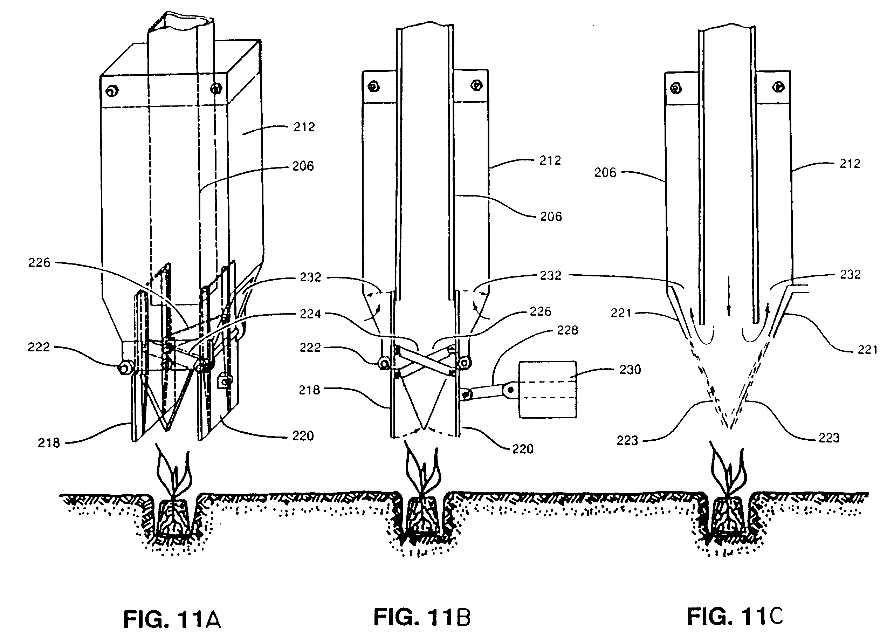

With reference to Figure 11, an alternate design for a plant transfer system used with advantage with plant trays of the present invention is shown therein and also indicated generally by the numeral 200. As will be understood from subsequent portions of this disclosure, the alternative plant transfer system 200 is designed to simultaneously transfer both the plant and water at one time to a planting area and is designed for use in a field transplanting operation, pot planting operation, or any other type of planting operation. The system also includes a bearing plate 202 that is provided with one or multiple plant drop opening 204. One or multiple drop tubes 206 extend downwardly from the opening 204 and acts to direct a dropping plant into a planting area or planting cavity. Drop tube 206 includes an outlet end 208 through which the dropping plant passes.

Extending around the lower portion of drop tube 206 and communicatively open to the outlet 208 of the drop tube is a vacuum system indicated generally by the numeral 210. Vacuum chamber 214 maybe opened and closed about the area surrounding the drop tube outlet 208 by a door assembly 216. As shown in Figures 11, 11A and 11B, door assembly 216 includes a pair of cooperating pivotally mounted doors 218 and 220. Each door 218 and 220 is pivotally mounted about a pivot axis 222. In order that the doors 218 and 220 can be simultaneously opened and closed together, there is provided a pair of pivotally connected cross links 224 and 226 that extend between opposite edges of the doors 218 and 220.

As seen in the drawings, when the respective doors 218 and 220 assume an open position there is defined an air opening 232 between the upper portion of the respective doors and the adjacent portion of the wall structure 212 forming the vacuum system 210. Also, it is appreciated that in the open vertical position the upper portion of the doors 218 and 220 abut against and are stopped by the lower portion of the drop tube 206.

A switch actuator 250 or other sensing means such as photo sensors, pressure sensors, etc. is secured within the interior plant drop tube 206 and operatively connected to a micro-switch 248 that is wired to a solenoid 230 that is connected to at least one door through a pull arm or connecting arm 228. As a dropping plant passes through drop tube 206, it activates the sensor which in turn actuate solenoid 230 to open the doors 218 and 220 to let the plant passes through. It is appreciated that the doors could be provided with springs to maintain them in a closed position. But it is appreciated from Figures 11, 11A and 11B that the differential pressure acting on the doors would tend to bias or maintain the doors in a closed position because of the greater surface area disposed below the pivot axis 222 of the respective doors. That is, the atmospheric pressure acting on the doors 218 and 220 would tend to urge the doors to a closed position.

It is appreciated that in lieu of the doors 218 and 220, there could be provided a high pressure air jet curtain that would be directed downwardly and inwardly around the drop tube 206 near the opening 208. This air curtain would effectively seal the system plus it would aid in strengthening suction due to curtain action directing and inducing the plant and water downwardly into the planting area. With reference to Figure 11C, the plant transfer system is shown with a high pressure air jet 221 that is operative to form an air curtain 223. It is appreciated that with this design there would not be a requirement for the cooperating doors.

Turning to the suction system, it is appreciated that the suction system could be continuous or intermittent. In an intermittent vacuum arrangement, a reciprocating piston or diaphragm within a cylinder can be used to generate pulses of vacuum and these intermittent pulses of vacuum would be operative to induce plants downwardly from the plant tray 10 through the drop tube 206.

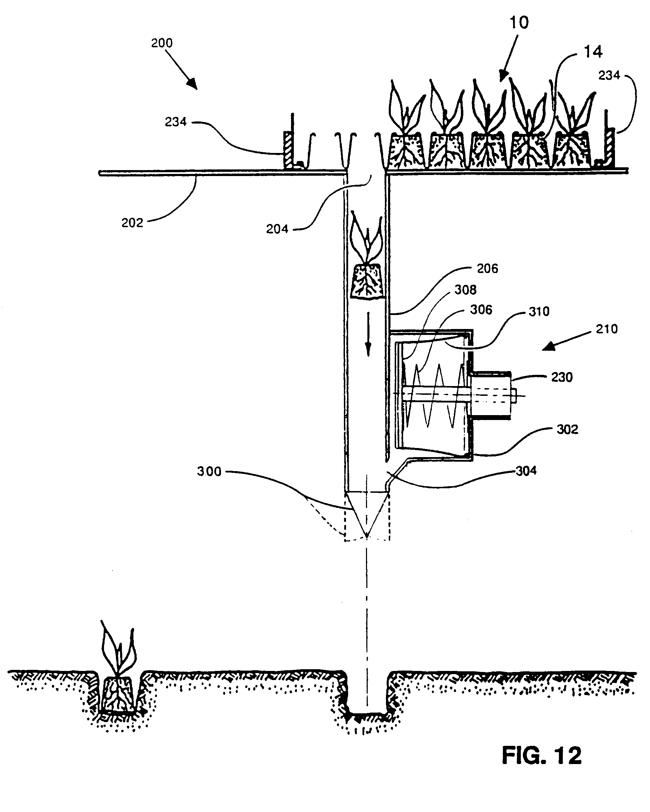

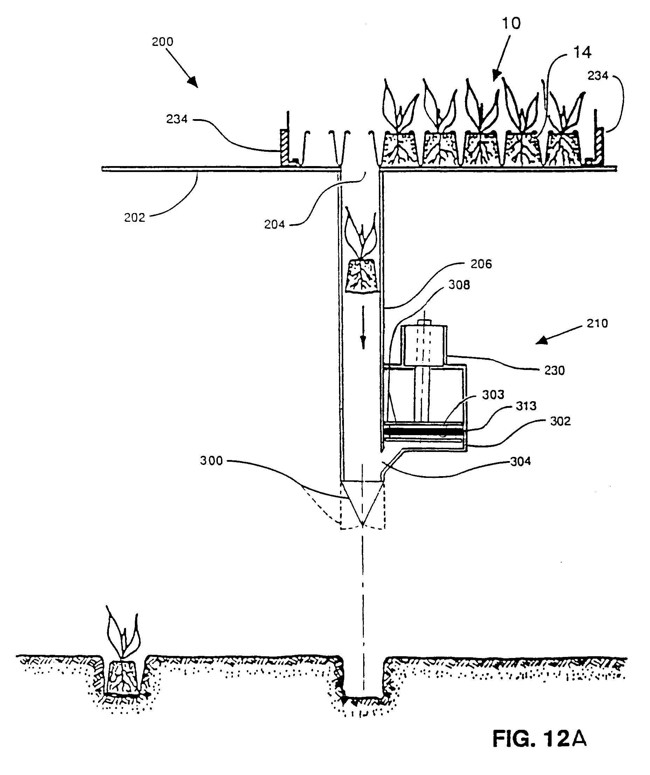

Turning to Figure 12, there is shown therein an intermittent or impulse vacuum arrangement and particularly a reciprocating diaphragm type vacuum system. With respect to this embodiment, it is noted that the disclosure is essentially the same as other plant transfer systems shown and disclosed herein. The basic difference between the embodiment shown in Figure 12 and the other plant transfer systems disclosed herein is that the design of Figure 12 does incorporate a reciprocating piston or diaphragm type impulse vacuum system.

Formed about the lower remote end of the drop tube 206 is a flexible door arrangement indicated by the reference numeral 300. This door design can be constructed of resilient material, plastic of any other suitable material that will close tight as the piston or diaphragm is activated to cause vacuum. This impulse type vacuum will instantly pull down the seedling and the weight and inertia of the plant will cause the plant to shoot through the door 300 to make the transplanting.

Now turning to the impulse type vacuum system shown in Figure 12, it is seen that the same includes a housing 302 that is secured to the drop tube 206 about the lower portion of the drop tube. The inside of the housing 302 is open to the interior of the drop tube 206 by an opening 304. This permits the vacuum system to draw a vacuum within the drop tube 206. Reciprocally mounted within the housing 302 is a piston assembly indicated generally by the numeral 210. The piston assembly 210 includes a piston plate 308 and a diaphragm 310 that is secured to the piston plate 308 and extends therefrom to where an end or edge portion of the diaphragm is connected to the wall structure of the housing 302 to form an airtight assembly in the front portion of the piston as shown in Figure 12. An actuating device, air cylinder or electric solenoid 230 is mounted at the end of housing 302 and is connected to the piston plate 308. Also a spring 306 is connected between the piston plate 308 and the back of housing 302 and acts to bias the piston plate 308 to an extended position. The housing 302 can be mounted vertically onto the drop tube 206 for gravitational return of piston plate 308 to eliminate the need of the spring 306. It is appreciated that the solenoid will be actuated in a synchronized time relationship with the movement of the plant tray 10 that is disposed over the drop tube 206. Essentially, just prior to the dropping of a plant, the piston assembly 210 is actuated to create a vacuum within housing 302 and the interior of the drop tube 206 which effectively causes the plant to be pulled or induced downwardly from the tray cell 14, through the drop tube 206 and through the door structure 300. Once the next succeeding tray cell 14 is properly aligned over the drop tube 206 and the plant transfer system is ready to dispense another plant, the impulse vacuum system 210 of Figure 12 is once again actuated so as to induce another plant downwardly through the plant drop tube 206. It is appreciated that various piston type designs (or continuous vacuum designs) can be incorporated to yield an impulse vacuum producing arrangement.

Now turning to the impulse type vacuum system shown in Figure 12A, it also includes a housing 302 that is vertically secured to the lower portion of the drop tube 206, with the inside of the lower portion of housing 302 open to the interior of the drop tube 206 by an opening 304. The piston assembly 210 includes piston plates 308 with air-release grooves 303 and O-ring 313 to form an airtight chamber in the lower portion of the piston as shown in Figure 12A. The O-ring is movable between lower and upper piston plates 308. An actuating device, such as solenoid 230 is mounted at the top of housing 302 and is connected to the piston plates 308. The solenoid is actuated in a synchronized time relationship with the movement of the plant tray 10 that is disposed over the drop tube 206. As the solenoid 230 pulls the piston plates 308 upward, the lower piston plate 308 makes contact with O-ring 313 to effectuate an air-tight seal, creating vacuum in the drop tube 206, causing the plant to be pulled or induced downwardly from the tray cell 14. As the solenoid 230 is deactuated, gravitational return of piston and plunger forces the upper piston plate 308 to contact with O-ring 313, reveals the air-release grooves 303 to release the air in the drop tube to facilitate returning of piston plates 308 to the initial position. Once the next succeeding tray cell 14 is properly aligned over the drop tube opening 204 and the plant transfer system is ready to dispense another seedling or plant.

In lieu of the vacuum systems disclosed in this invention, it should be pointed out that the plant transfer or transplanting system could be provided with a pressure chamber that would be disposed above the plant tray and would exert a downward force on the plants and as such, would provide the force for directing or inducing the respective plants from the plant tray cells.

From the foregoing specification and discussion it is appreciated that the present invention entails a plant tray system that lends itself to air-pruning but yet is provided with a bottom detachable screen that assists in confining and holding the plant growing medium within the plant tray. The air-pruning tray becomes part of automatic transplanting system and each plant is effectively and efficiently pulled out and transplanted using continuous, intermittent or impulse vacuum system, all in the one basic operation.

The present invention may, of course, be carried out in other specific ways than those herein set forth without parting from the essential characteristics of the invention. The present embodiments are, therefore, to be considered in all respects as illustrative and not restrictive, and all changes coming within the meanings and equivalency range of the appended Claims are intended to be embraced therein.

## Claims

1. An air-pruning plant tray comprising: a plant tray (10) having a surrounding side structure (16), and means (14) with an open bottom incorporated within the plant tray for holding a plant growing medium such as soil, peat cake or peat mix; a bottom screen (20) detachably secured to the surrounding side structure of the plant tray (10) for retaining the plant growing medium within the plant tray and for giving rise to air pruning; and means (21) for detachably securing the bottom screen to the surrounding side structure of the plant tray so as to form a unitary plant tray and screen structure, such that the bottom screen can be readily attached to and detached from the plant tray (10).

2. The air-pruning plant tray of claim 1 wherein the plant tray (10) includes a plurality of individual plant cells (14) with each plant cell including a surrounding side wall structure and an open top and bottom.

3. The air-pruning plant tray of claim 1 or 2 wherein the detachable screen includes a turned up side (21) that extends around the perimeter of the screen and wherein the turned up side (21) in an attached mode frictionally engages the surrounding side structure of the plant tray and effectively couples the screen to the bottom of the tray.

4. The air-pruning plant tray of claim 3 wherein the turned up side (21) of the screen frictionally engages the exterior of the surrounding side structure (16) of the plant tray such that the plant tray (10) tends to be nested within the turned up side of the screen.

5. The air-pruning plant tray of claim 3 or 4 wherein the turned up side (21) of the screen (20) includes an upper outer projecting edge (21a).

6. The air-pruning plant tray of claim 5 wherein the surrounding side structure (16) of the plant tray (10) includes an outer directed upper tray edge (16a) and wherein in the attached mode there is a vertical space defined between the upper tray edge (16a) and the upper edge (21a) of the turned up side (21) of the screen that permits fingertips to be positioned therebetween for separating the screen (20) from the plant tray.

7. The air-pruning plant tray of any of claims 3 to 6 wherein the surrounding turned up side (21) of the screen (20) is at least slightly flexible so as to permit the plant tray (10) to be easily and conveniently nested within the turned up side (21) of the screen (20).

8. The air-pruning plant tray and detachable screen (20) of any of claims 3 to 7 wherein the surrounding side structure (16) of the plant tray (10) includes an upper terminal edge (16a) and wherein the turned up side (21) of the screen (20) includes an inwardly directed clip (21b) that extends over the upper terminal edge of the surrounding side structure of the plant tray so as to securely couple the screen (20) to the plant tray.

9. The air-pruning plant tray of claim 1 wherein said means for detachably securing the bottom screen to the open bottom of the plant tray include slide flanges (12b) formed around a selected portion of the plant tray structure and wherein the screen includes a slide groove (29) that extends from the screen (20) and is adapted to be confined about the slide flanges (12b) such that the screen may be supported by the slide flanges while also allowing the screen (20) to be removed from the plant tray structure by sliding the screen from the tray.

10. The air-pruning plant tray of claim 1 wherein the surrounding side structure (16) of the plant tray is designed to hold water.

11. The air-pruning plant tray of claims 2 and 10 in combination wherein there are provided microholes in respective plant cells (14) for the purpose of self-watering.

12. The air-pruning plant tray of claims 2 and 10 in combination wherein the surrounding side structure (16) of the plant tray extends above the height of the plant cells (14) so that respective plants in the plant cells can be uniformly self-watered, from the top.

13. The air-pruning plant tray of any of claims 10 to 12 wherein the water held within the tray gives rise to a generally uniform temperature and moisture content throughout the tray.

14. The air-pruning plant tray of any of claims 10 to 13, in combination with claim 2, wherein the plant tray is adapted to expel water through a respective plant cell (14) when the plant of that cell is removed from the plant tray such that the expelled water moves downwardly with the removed plant as it is directed to an planting site.

## Patentansprüche

1. Pflanzenschale mit Luftbeschneidung umfassend: eine Pflanzenschale (10) mit einer umgebenden Seitenstruktur (16) und einer in der Pflanzenschale integrierten Einrichtung (14) mit einem offenen Boden, um ein Pflanzenwachstumsmedium, wie z.B. Erdboden, Torfkuchen oder Torfmischung, zu halten; ein Bodengitter (20), das abnehmbar an der umgebenden Seiten-struktur der Pflanzenschale (10) befestigt ist, um das Pflanzenwachstumsmedium in der Pflanzenschale zu halten und um Anlaß zum Luftbeschneiden zu geben; und eine Einrichtung (21), um das Bodengitter abnehmbar an der umgebenden Seitenstruktur der Pflanzenschale zu befestigen, so daß eine Einheitsstruktur von Pflanzenschale und Gitter gebildet wird, derart daß das Bodengitter leicht an der Pflanzenschale (10) angebracht und von ihr abgenommen werden kann.

2. Pflanzenschale mit Luftbeschneidung nach Anspruch 1, bei der die Pflanzenschale (10) eine Mehrzahl von einzelnen Pflanzenzellen (14) einschließt, wobei jede Pflanzenzelle eine umgebende Seitenwandstruktur und ein offenes oberes Ende und einen offenen Boden einschließt.

3. Pflanzenschale mit Luftbeschneidung nach Anspruch 1 oder 2, bei der das abnehmbare Gitter eine aufgebogene Seite (21) einschließt, die sich um den Umfang des Gitters erstreckt, und bei der die aufgebogene Seite (21) in einem Befestigungsmodus mit der umgebenden Seitenstruktur der Pflanzenschale in Reibungseingriff steht und das Gitter wirkungsvoll an den Boden der Schale koppelt.

4. Pflanzenschale mit Luftbeschneidung nach Anspruch 3, bei der die aufgebogene Seite (21) des Gitters mit der Außenseite der umgebenden Seitenstruktur (16) der Pflanzenschale in Reibungseingriff steht, derart daß die Pflanzenschale (10) die Tendenz hat, in die aufgebogene Seite des Gitters eingepaßt zu werden.

5. Pflanzenschale mit Luftbeschneidung nach Anspruch 3 oder 4, bei der die aufgebogene Seite (21) des Gitters (20) einen oberen nach außen vorstehenden Rand (21a) einschließt.

6. Pflanzenschale mit Luftbeschneidung nach Anspruch 5, bei der die umgebende Seitenstruktur (16) der Pflanzenschale (10) einen nach außen gerichteten oberen Schalenrand (16a) einschließt und bei der es im Befestigungsmodus einen vertikalen Zwischenraum gibt, der zwischen dem oberen Schalenrand (16a) und dem oberen Rand (21a) der aufgebogenen Seite (21) des Gitters definiert ist, der erlaubt, daß Fingerspitzen zwischen ihnen positioniert werden, um das Gitter (20) von der Pflanzenschale zu trennen.

7. Pflanzenschale mit Luftbeschneidung nach einem der Ansprüche 3 bis 6, bei der die umgebende aufgebogene Seite (21) des Gitters (20) mindestens geringfügig biegsam ist, so daß ermöglicht wird, daß die Pflanzenschale (10) leicht und bequem in die aufgebogene Seite (21) des Gitters (20) eingepaßt wird.

8. Pflanzenschale mit Luftbeschneidung und abnehmbares Gitter (20) nach einem der Ansprüche 3 bis 7, bei denen die umgebende Seitenstruktur (16) der Pflanzenschale (10) einen oberen Endrand (16a) einschließt und bei denen die aufgebogene Seite (21) des Gitters (20) eine nach innen gerichtete Halteeinrichtung (21b) einschließt, die sich über den oberen Endrand der umgebenden Seitenstruktur der Pflanzenschale erstreckt, so daß das Gitter (20) fest an die Pflanzenschale gekoppelt wird.

9. Pflanzenschale mit Luftbeschneidung nach Anspruch 1, bei der die Einrichtung zum abnehmbaren Befestigen des Bodengitters am offenen Boden der Pflanzenschale Schiebeflansche (12b) einschließt, die um einen gewählten Abschnitt der Pflanzenschalenstruktur herum gebildet sind, und bei der das Gitter eine Gleitnut (29) einschließt, die sich aus dem Gitter (20) erstreckt und so angepaßt ist, daß sie um die Schiebeflansche (12b) herum beschränkt ist, derart daß das Gitter von den Schiebeflanschen getragen werden kann, während auch ermöglicht wird, daß das Gitter (20) von der Pflanzenschalenstruktur entfernt wird, indem man das Gitter von der Schale wegschiebt.

10. Pflanzenschale mit Luftbeschneidung nach Anspruch 1, bei der die umgebende Seitenstruktur (16) der Pflanzenschale konstruiert ist, um Wasser aufzunehmen.

11. Pflanzenschale mit Luftbeschneidung nach den Ansprüchen 2 und 10 in Kombination, bei der zum Zweck einer Selbstbewässerung Mikrolöcher in jeweiligen Pflanzenzellen (14) vorgesehen sind.

12. Pflanzenschale mit Luftbeschneidung nach den Ansprüchen 2 und 10 in Kombination, bei der sich die umgebende Seitenstruktur (16) der Pflanzenschale über die Höhe der Pflanzenzellen (14) erstreckt, so daß jeweilige Pflanzen in den Pflanzenzellen gleichförmig von oben selbstbewässert werden können.

13. Pflanzenschale mit Luftbeschneidung nach einem der Ansprüche 10 bis 12, bei der das in der Schale aufgenommene Wasser überall in der Schale eine im allgemeinen gleichförmige Temperatur und einen im allgemeinen gleichförmigen Feuchtigkeitsgehalt hervorruft.

14. Pflanzenschale mit Luftbeschneidung nach einem der Ansprüche 10 bis 13, in Kombination mit Anspruch 2, bei der die Pflanzenschale so angepaßt ist, daß Wasser durch eine jeweilige Pflanzenzelle (14) herausgespült wird, wenn die Pflanze dieser Zelle aus der Pflanzenschale entfernt wird, derart daß sich das herausgespülte Wasser mit der entfernten Pflanze nach unten bewegt, wenn sie zu einer Anpflanzungsstelle geleitet wird.

## Revendications

1. Plateau à plantes, à taille dans l'air, comprenant : un plateau à plantes (10) ayant une structure latérale de pourtour (16), et des moyens (14) comportant un fond ouvert, intégrés dans le plateau à plantes pour maintenir un milieu de croissance de plantes, tel que de la terre, un gâteau de tourbe ou un mélange de tourbe; un écran inférieur (20) fixé de manière amovible à la structure latérale de pourtour du plateau à plantes (10) pour maintenir le milieu de croissance de plantes dans le plateau à plantes et pour donner lieu à une taille dans l'air; et des moyens (21) servant à fixer de manière amovible l'écran inférieur à la structure latérale de pourtour du plateau à plantes, de manière à former un plateau à plantes et une structure d'écran monoblocs, de façon que l'écran inférieur puisse être facilement fixé au, et détaché du, plateau à plantes (10).

2. Plateau à plantes, à taille dans l'air, selon la revendication 1, dans lequel le plateau à plantes (10) comprend une pluralité de cellules à plantes (14) individuelles, chaque cellule à plantes comprenant une Structure de paroi latérale de pourtour et un sommet et un fond ouverts.

3. Plateau à plantes, à taille dans l'air, selon la revendication 1 ou 2, dans lequel l'écran amovible comprend un côté (21) tourné vers le haut, qui s'étend autour du périmètre de l'écran, et dans lequel le côté (21) tourné vers le haut selon un mode fixe s'engage avec friction contre la structure latérale de pourtour de plateau à plantes et couple efficacement l'écran au fond du plateau.

4. Plateau à plantes, à taille dans l'air, selon la revendication 3, dans lequel le côté (21) tourné vers le haut s'engage avec friction contre la partie extérieure de la structure de pourtour environnante (16) du plateau à plantes, de manière que le plateau à plantes (10) ait tendance à être emboîté dans le côté tourné vers le haut de l'écran.

5. Plateau à plantes, à taille dans l'air, selon la revendication 3 ou 4, dans lequel le côté (21) tourné vers le haut de l'écran (20) comprend un bord saillant extérieur (21a) supérieur.

6. Plateau à plantes, à taille dans l'air, selon la revendication 5, dans lequel la structure latérale environnante (16) du plateau à plantes (10) comprend un bord de plateau supérieur (16a) orienté vers l'extérieur et dans lequel, dans le mode fixe, se trouve un espace vertical défini entre le bord de plateau supérieur (16a) et le bord supérieur (21a) du côté (21) tourné vers le haut de l'écran, qui permet aux bouts des doigts d'être positionnés entre eux pour séparer l'écran (20) du plateau à plantes.

7. Plateau à plantes, à taille dans l'air, selon l'une quelconque des revendications 3 à 6, dans lequel le côté de pourtour (21) tourné vers le haut de l'écran (20) est au moins légèrement flexible de manière à permettre au plateau à plantes (10) d'être emboîté facilement et de manière appropriée dans le côté (21) tourné vers le haut de l'écran (20).

8. Plateau à plantes, à taille dans l'air, et écran amovible (20) selon l'une quelconque des revendications 3 à 7, dans lesquels la structure latérale de pourtour (16) du plateau à plantes (10) comprend un bord d'extrémité supérieur (16a), et dans lequel le côté (21) tourné vers le haut de l'écran (20) comprend une pince (21b) orientée vers l'intérieur, qui s'étend sur le bord d'extrémité supérieure de la structure latérale de pourtour du plateau à plantes, de manière à coupler de façon sûre l'écran (20) au plateau à plantes.

9. Plateau à plantes, à taille dans l'air, selon la revendication 1, dans lequel lesdits moyens amovibles de fixation de l'écran inférieur au fond ouvert du plateau à plantes comprennent des brides coulissantes (12b) formées autour d'une partie sélectionnée de la structure de plateau à plantes et dans lequel l'écran comprend une gorge coulissante (29) qui s'étend depuis l'écran (20) et est adaptée de façon à être confinée autour des brides coulissantes (12b), de manière que l'écran puisse être porté par les brides coulissantes, tout en permettant également à l'écran (20) d'être retiré de la structure de plateau à plantes en faisant coulisser l'écran depuis le plateau.

10. Plateau à plantes, à taille dans l'air, selon la revendication 1, dans lequel la structure latérale de pourtour (16) du plateau à plantes est conçue pour contenir de l'eau.

11. Plateau à plantes, à taille dans l'air, selon les revendications 2 et 10 en combinaison, dans lequel sont prévus des micro-trous dans des cellules à plantes (14) respectives, en vue d'assurer une auto-hydratation.

12. Plateau à plantes, à taille dans l'air, selon les revendications 2 et 10 en combinaison, dans lequel la structure latérale de pourtour (16) du plateau à plantes s'étend au-dessus de la hauteur des cellules à plantes (14), de manière que des plantes respectives contenues dans les cellules à plantes puissent être uniformément auto-hydratées, par le haut.

13. Plateau à plantes, à taille dans l'air, selon l'une quelconque des revendications 10 à 12, dans lequel l'eau maintenue dans le plateau fait que la température et la teneur en humidité sont globalement uniformes dans tout le plateau.

14. Plateau à plantes, à taille dans l'air, selon l'une quelconque des revendications 10 à 13, en combinaison avec la revendication 2, dans lequel le plateau à plantes est adapté de façon à expulser de l'eau via une cellule à plante (14) respective, lorsque la plante de cette cellule est retirée du plateau à plantes, de manière que l'eau expulsée se déplace vers le bas, conjointement avec la plante retirée, lorsqu'elle est orientée vers un site de plantation.
